# EUROPÄISCHE PATENTSCHRIFT

(11) **EP 2 640 334 B1**
(45) Veröffentlichungstag und Bekanntmachung des Hinweises auf die Patenterteilung: **20.01.2016**
(21) Anmeldenummer: 11782618.0
(22) Anmeldetag: 15.11.2011
(51) Int. Cl.: A61G 7/018, A47C 20/04, A47C 31/00, G08C 17/02, G08C 19/00, G08C 23/04, H02K 99/00, H04M 1/04, H04M 1/725

(54) **ELEKTROMOTORISCHER MÖBELANTRIEB**
ELECTRIC MOTOR FURNITURE DRIVE
COMMANDE À MOTEUR ÉLECTRIQUE POUR MEUBLE

(30) Priorität: 16.11.2010 DE 202010012910 U
(43) Veröffentlichungstag der Anmeldung: 25.09.2013
(73) Patentinhaber: DewertOkin GmbH, 32278 Kirchlengern (DE)
(72) Erfinder: LOLEY, Steffen, 49074 Osnabrück (DE)
(74) Vertreter: Kleine, Hubertus
(86) Internationale Anmeldenummer: PCT/EP2011/070136
(87) Internationale Veröffentlichungsnummer: WO 2012/065984

(56) Entgegenhaltungen:
- EP-A2- 2 374 439
- US-A1- 2006 058 587
- US-A1- 2008 092 292
- US-A1- 2010 231 421
- US-B1- 6 351 678

## Beschreibung

Die Erfindung betrifft einen elektromotorischen Möbelantrieb für ein ein oder mehrere verstellbare Möbelbauteile enthaltendes Möbel, insbesondere ein Pflege- oder Hospitalbett, mit einer Steuereinrichtung, mindestens einem Verstellantrieb und mindestens einer Bedienungseinrichtung.

Der in Rede stehende elektromotorische Möbelantrieb ist in vielen Ausführungen bekannt. Die jeweilige Ausführung richtet sich nach der Art des zu verstellenden Möbels, beispielsweise eines Lattenrostes, eines Kranken- oder Pflegebettes oder eines Sitz- und Liegemöbels oder zur Höhenverstellung einer Tischplatte. Der Möbelantrieb kann als Einzel-, Doppelantrieb oder/und Mehrfachantrieb ausgeführt sein. Bei Einzelantrieben ist mit dem Antriebsgetriebemotor eine Antriebseinheit gekoppelt, während bei einem Doppelantrieb mit einem Getriebemotor oder mit zwei Getriebemotoren gekoppelte Antriebseinheiten vorgesehen sind, die in einem gemeinsamen Gehäuse angeordnet sind. DE 291 22 179 U1 beschreibt einen Möbelantrieb mit wenigstens einem elektromechanischen Antriebszug und einer Steuereinheit, die zur Auslösung der Funktionen mittels eines Bedienelementes ansteuerbar ist.

US 2010/0231421 A1 beschreibt eine Handfernbedienung für ein verstellbares Bett.

Es sind Multimediageräte wie zum Beispiel Smartphones bekannt, welche im Zuge der fortschreitenden Entwicklung als Multifunktionsbedienteile ständig mit zusätzlichen Funktionen ausgerüstet werden.

Der Erfindung liegt die Aufgabe zugrunde, einen elektromotorischen Möbelantrieb der eingangs näher beschriebenen Art zur Zusammenwirkung mit Multimediageräten zu verbessern.

Die gestellte Aufgabe wird gemäß den angehängten Ansprüchen gelöst, indem ein elektromotorischer Möbelantrieb für ein ein oder mehrere verstellbare Möbelbauteile enthaltendes Möbel, insbesondere ein Pflege- oder Hospitalbett, mit einer Steuereinrichtung, mindestens einem Verstellantrieb und mindestens einer Bedienungseinrichtung, wobei die mindestens eine Bedienungseinrichtung als ein Multifunktionsbedienteil ausgebildet ist und über eine Anpassungseinrichtung mit der Steuereinrichtung in Verbindung steht, wobei die Anpassungseinrichtung zur Anpassung und Weiterleitung von Rückmeldesignalen der Steuereinrichtung an die Bedienungseinrichtung ausgebildet ist, wobei die Rückmeldesignale zur Plausibilisierung von Steuersignalen der Bedienungseinrichtung derart verwendbar sind, dass ein durch eine Störung erzeugtes oder verändertes Steuersignal anhand eines nicht gebildeten Rückmeldesignals als nicht verwendbar erkannt wird.

Unter einem Multifunktionsbedienteil sind in der vorliegenden Schrift folgende Geräte zu verstehen: Mobiltelefon, Handheld-Gerät, Laptop, Gerät mit Bluetooth-Funktion, normales Telefon, Smartphone, Personal Digital Assistant (PDA), Electronic Organizer und dergleichen.

Diese Bedienteile werden zur Bedienung eines zu verstellenden Möbels, beispielsweise eines Lattenrostes, eines Kranken- oder Pflegebettes oder eines Sitz- und Liegemöbels oder zur Höhenverstellung einer Tischplatte benutzt.

In einer weiteren Ausführung kann der elektromotorische Möbelantrieb weiterhin eine Buseinheit aufweisen, wobei die Buseinheit zwischen die Anpassungseinrichtung und die Steuereinrichtung geschaltet ist. Damit sind weitere Einsatzmöglichkeiten geschaffen.

Zum Anschluss der mindestens einen Bedienungseinrichtung kann die Anpassungseinrichtung eine Schnittstelle und mindestens eine Umsetzereinrichtung aufweisen.

Die Steuereinrichtung kann mindestens einen Rückmeldesignalerzeuger zur Erzeugung von Rückmeldesignalen aufweisen. Es ist weiterhin vorgesehen, dass die Bedienungseinrichtung zum Empfang der von der Anpassungseinrichtung angepassten und weitergeleiteten Rückmeldesignale der Steuereinrichtung ausgebildet sein kann. Dies kann beispielsweise softwaremäßig ausgeführt sein. Außerdem kann die Bedienungseinrichtung zur Anzeige der von der Anpassungseinrichtung angepassten und weitergeleiteten Rückmeldesignale der Steuereinrichtung in geeigneter Form mit einem Anzeigeabschnitt ausgebildet sein. Mit anderen Worten können bestimmte Symbole und/oder Logos zur Anzeige kommen, um die betätigten Funktionen allgemein verständlich für einen Bediener anzuzeigen.

Der elektromotorische Möbelantrieb weist eine Prozessoreinheit auf, welche zur Erkennung von Betätigungsfehlern der Bedienungseinrichtung ausgebildet sein kann. Das bedeutet, dass z.B. durch gleichzeitiges Betätigen von Tastenelementen der Bedienungseinrichtung keine Steuersignalen erzeugt werden, wodurch eine Fehlsteuerung und auch Überlastung der Verstellantriebe und/oder der Steuereinrichtung verhindert werden kann.

Im Falle eines Pflege- und/oder Krankenhausbettes kann der elektromotorische Möbelantrieb eine Handbedienung mit mindestens einer durch autorisiertes Personal bedienbaren Sperrfunktion aufweisen. Ein Zustand der mindestens einen Sperrfunktion kann mittels der mindestens einen Bedienungseinrichtung anzeigbar sein.

Anhand der beiliegenden Zeichnungen wird die Erfindung noch näher erläutert.

Es zeigen:
- Figur 1: eine schematische Blockdarstellung eines ersten Ausführungsbeispiels eines erfindungsgemäßen Möbelantriebs; und
- Figur 2: eine schematische Blockdarstellung eines zweiten Ausführungsbeispiels des erfindungsgemäßen Möbelantriebs.

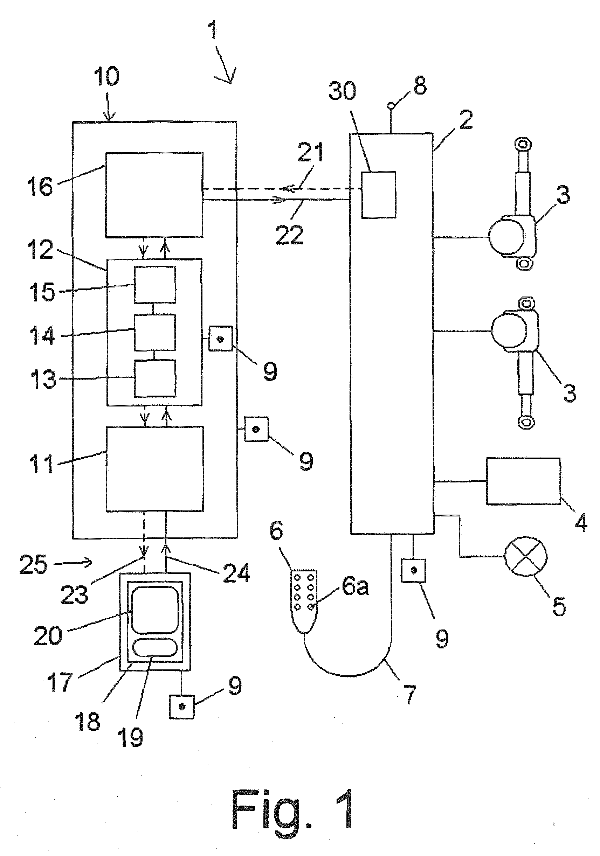

In Fig. 1 ist eine schematische Blockdarstellung eines ersten Ausführungsbeispiels eines erfindungsgemäßen Möbelantriebs 1 gezeigt.

Der Möbelantrieb 1 umfasst in diesem ersten Ausführungsbeispiel eine Steuereinrichtung 2, zwei Verstellantriebe 3, eine Heizung 4, ein Beleuchtungselement 5, eine Handbedienung 6, eine Anpassungseinrichtung 10 und eine Bedienungseinrichtung 17.

Die Verstellantriebe 3 dienen jeweils zur Verstellung eines Möbelteils (nicht gezeigt), zum Beispiel eines Kopfteils und eines Fußteils eines Bettes, beispielsweise eines Krankenhausbettes. Die Heizung 4 kann z.B. als Heizdecke oder Heizkissen ausgebildet sein oder in ein Möbelbauteil, beispielsweise in einer Matratze oder in einem Sitzteil bzw. in einem Rückenteil, integriert sein, und das Beleuchtungselement 5 ist beispielsweise eine Leselampe oder ein Nachtlicht. Die Steuerungseinrichtung 2 wird mit elektrischer Energie über einen Versorgungsanschluss 8 aus einem öffentlichen oder lokalen Netz oder/und aus einer nachladbaren Batterie gespeist. Mittels der Handbedienung 6 können die Verstellantriebe 3 so bedient werden, dass die Steuerungseinrichtung 2 anhand von durch Bedienungselemente 6a erzeugten Steuersignalen die Verstellantriebe 3 zur Verstellung des jeweiligen Möbelteils in eine gewünschte Position mit elektrischer Energie versorgt. Dabei können elektromechanische Schalter (Relais) und/oder Halbleiterschalter (z.B. Mosfet) verwendet werden. Ebenso können Heizung 4 und Beleuchtungselement 5 ein- und ausgeschaltet werden.

Die Handbedienung 6 ist als ein üblicher Handschalter, ein Handschalter mit mechanischem Sperrschloss oder/und eine Sperrbox ausgebildet und ist über eine Verbindungsstrecke 7 mit der Steuerungseinrichtung 2 verbunden. Die Verbindungsstrecke 7 kann eine Drahtverbindung, eine Funkstrecke und/oder eine Infrarotstrecke sein. Bei dem angegebenen Beispiel eines Krankenbettes kann mittels Sperrschloss oder ähnlicher Schaltelemente nur eine autorisierte Person Funktionen der Steuerungseinrichtung 2 für den im Krankenbett liegenden Patienten sperren. Eine so genannte Erstfehlersicherheit der Verstellantriebe 3, der Heizung 4, des Beleuchtungselementes 5 mit der Steuereinrichtung 2 kann somit vorhanden sein.

In dem hier gezeigten ersten Ausführungsbeispiel ist die Handbedienung 6 nur für autorisiertes Personal vorgesehen. Für den Patienten ist in dessen Reichweite die Bedienungseinrichtung 17 vorgesehen.

Die Bedienungseinrichtung 17 ist als ein Multifunktionsbedienteil für Patientenkommunikation vielfältiger Art mit einem großflächigen Touchscreen 18 mit einem Bedienungsabschnitt 19 und einem Anzeigeabschnitt 20 dargestellt. Für die Bedienungseinrichtung 17 können aber auch unterschiedliche Geräte zur Anwendung kommen, wie beispielsweise Mobiltelefon, Handheld-Gerät, Laptop, Gerät mit Bluetooth-Funktion, normales Telefon, Smartphone, Personal Digital Assistant (PDA), Electronic Organizer, uva. mehr. Selbstverständlich sind auch Bedienungseinrichtungen 17 mit individuellen Ausbildungen möglich, wie zum Beispiel mit USB-Schnittstelle und/oder anderen Übertragungseigenschaften. Diese Aufzählung erhebt nicht den Anspruch auf Vollständigkeit. Wesentlich ist jedoch, dass als Bedienungsabschnitt 19 Tasten/Tastenelemente und/oder ein Touchscreen vorgesehen sind.

Die Anpassungseinrichtung 10 ist dazu ausgebildet, die oben aufgelisteten Geräte, die als Bedienungseinrichtung 17 im Prinzip universell und vor allen Dingen individuell ausgewählt werden können, mit der Steuerungseinrichtung 2 zu verbinden. Damit wird die Möglichkeit geschaffen, dass diese - auch unterschiedlichen - Bedienungseinrichtungen17 zur Steuerung des elektromotorischen Möbelantriebs 1 benutzbar sind.

So ist die Anpassungseinrichtung 10 mit der jeweiligen Bedienungseinrichtung 17 über eine Bedienungsstrecke 25 verbindbar. Die Bedienungsstrecke 25 kann sowohl drahtgebunden als auch drahtlos, wie zum Beispiel eine übliche Funkstrecke, Bluetooth und/oder Infrarot oder dergleichen, ausgebildet sein. Die Bedienungsstrecke 25 weist hier eine Rückmeldeleitung 23 und eine Aktionsleitung 24 auf, welche weiter unten noch näher erläutert werden.

Weiterhin ist die Steuerungseinrichtung 2 über eine Aktionsstrecke 22 und eine Rückmeldestrecke 21, welche unten noch näher beschrieben werden, mit der Anpassungseinrichtung 10 verbunden. Diese Verbindung kann als feste und/oder steckbare Drahtverbindung und/oder drahtlos ausgebildet sein. Die Bedienungseinrichtung 17 kann über die Anpassungseinrichtung 10 mit der Steuerungseinrichtung 2 kommunizieren, um die Verstellantriebe 3, die Heizung 4 und das Beleuchtungselement 5 zu bedienen, d.h. ein- und auszuschalten sowie zu verstellen.

An einer beispielhaften Ausführung wird nun der Aufbau der Anpassungseinrichtung 10 näher erläutert.

Die Anpassungseinrichtung 10 umfasst hier eine Schnittstelle 11, eine Umsetzereinrichtung 12 und einen Pegelanpasser 16. Die Bedienungseinrichtung 17 ist beispielsweise mit einem Betriebssystem (z.B. Linux o.dgl.) versehen und über eine USB-Verbindung als Bedienungsstrecke 25 mit der Schnittstelle 11 der Anpassungseinrichtung 10 verbunden. Die Schnittstelle 11 dient zur Anpassung der USB-Verbindung der Bedienungseinrichtung 17 und ist mit der Umsetzereinrichtung 12 verbunden, welche hier drei Umsetzer 13, 14, 15 aufweist, die eine Übersetzung von Steuerbefehlen der Bedienungseinrichtung 17 zwischen USB und der Steuereinrichtung ausführen. Die Umsetzereinrichtung 12 weist üblicherweise einen Controller, einen Speicher und zumindest ein Übersetzungsprogramm auf. Der erste Umsetzer 13 führt eine Umsetzung von USB auf RS232 aus und der zweite Umsetzer 14 dient zu einer weiteren Umsetzung von RS232 auf RS485. Für eine weitere Umsetzung ist der dritte Umsetzer 15 zuständig, welcher zum Beispiel u.a. eine Verstärkungsfunktion aufweisen kann. Schließlich kann der Pegelanpasser 16 vorgesehen sein, welcher zwischen der Umsetzereinrichtung 12 und der Steuereinrichtung 2 angeordnet ist und eine Anpassung zur Steuereinrichtung 2 vornimmt.

Zur Bedienung eines Verstellantriebs 3 (oder der Heizung 4 oder des Beleuchtungselementes 5) wird nun ein auf dem Bedienungsabschnitt 19 angeordnetes Tastenelement gedrückt. Ein entsprechendes Steuersignal wird daraufhin von dem Steuerprogramm der Bedienungseinrichtung 17 erzeugt und über die Bedienungsstrecke 25 mittels der Aktionsleitung 24 der Anpassungseinrichtung 10 zugeleitet. Die Anpassungseinrichtung 10 führt entsprechende Anpassungen und Be- und/oder Verarbeitungen dieses Steuersignals derart durch, dass es über die Aktionsstrecke 22 in angepasster Form und mit entsprechendem Pegel in der Steuereinrichtung 2 das zugehörige Schaltelement, z.B. ein Relais, einschaltet, wodurch der Verstellantrieb 3 in die gewünschte Richtung fährt. Bei Loslassen des betätigten Tastenelementes des Tastenabschnitts 19 der Bedienungseinrichtung 17 wird der Verstellantrieb 3 wieder ausgeschaltet.

Die Kommunikation über die Bedienungsstrecke 25 und/oder der Anpassungseinrichtung 10 und/oder der Steuereinrichtung 2 ist durch serielle Datensignale oder durch logische Datensignale und/oder logische Schaltsignale gebildet. Diese Datensignale werden als elektrische Datensignale drahtgebunden geleitet. Bei drahtlosen Übertragungsstrecken werden sie als elektromagnetische Funksignale oder Lichtsignale übertragen.

Die Steuereinrichtung 2 weist außerdem einen Rückmeldesignalerzeuger 30 auf. Der Rückmeldesignalerzeuger 30 erzeugt zunächst ein Rückmeldesignal für die jeweilige betätigte Funktion und sendet dieses Rückmeldesignal über die Rückmeldestrecke 21 an die Anpassungseinrichtung 10. Dort wird das Rückmeldesignal wie oben beschrieben auf umgekehrtem Wege umgesetzt und über die Rückmeldeleitung 23 der Bedienungseinrichtung 17 zugeführt. Die Bedienungseinrichtung 17 kann daraufhin eine entsprechende Rückmeldung auf dem Anzeigeabschnitt 20 anzeigen, nämlich dass die betätigte Funktion durchgeführt wird. Die Bedienungseinrichtung 17 kann anhand der Rückmeldung auch eine Plausibilitätskontrolle durchführen, wie unten noch näher erläutert wird. Ebenfalls wird eine Beendigung der betätigten Funktion zurückgemeldet.

Weiterhin wird von dem Rückmeldesignalerzeuger 30 ein Rückmeldesignal erzeugt, wenn der jeweilige Verstellantrieb 3 eine Endstellung erreicht hat und daher keine Verstellung mehr in der gewünschten Richtung ausführen kann. Es können auch die Temperatur der Heizung 4, die Verstellposition eines jeden Verstellantriebs 3, die Intensität einer (nicht gezeigten) Massageeinrichtung, Schaltzustände und Intensitäten des Beleuchtungselementes 5 u.dgl. angezeigt werden. Der Rückmeldesignalerzeuger 30 kann auch für Fehlermeldungen der Steuereinrichtung 2 zugehörige Rückmeldesignale erzeugen, die auf dem Anzeigeabschnitt 20 der Bedienungseinrichtung 17 mit geeigneten Symbolen angezeigt werden können. So kann ein Verstellantrieb ohne Funktion angezeigt werden. Es ist auch möglich, dass eine Ursache für den Fehler angezeigt wird, wie z.B. ein nicht schaltendes Relais oder eine Überlastung bei Übertemperatur.

Auch gesperrte Funktionen können auf der Bedienungseinrichtung 17 entsprechend dem Bediener angezeigt werden, so dass unnötige Betätigungen und somit zusätzlicher Verschleiß durch z.B. heftiges Drücken auf angeblich nicht funktionierende Tastenelemente unterbleiben kann.

In der Bedienungseinrichtung 17 oder der Anpassungseinrichtung 10 oder der Steuereinrichtung 2 kann eine Funktion integriert sein (z.B. Software), mit welcher es möglich ist, Fehler bei der Bedienung von Tastenelementen des Tastenabschnitts 19 zu erkennen, wie zum Beispiel mehrere gleichzeitig gedrückte Tastenelemente. Dabei kann eine Befehlsrückführung zum Sender, d.h. zur Bedienungseinrichtung 17 erfolgen, um das gesendete Steuersignal auf Plausibilität zu überprüfen. Ein erneutes Senden mit zusätzlichem oder anderem Freigabekode bzw. Schalten einer Leitung auf ein bestimmtes Potential kann möglich sein und ausgeführt werden.

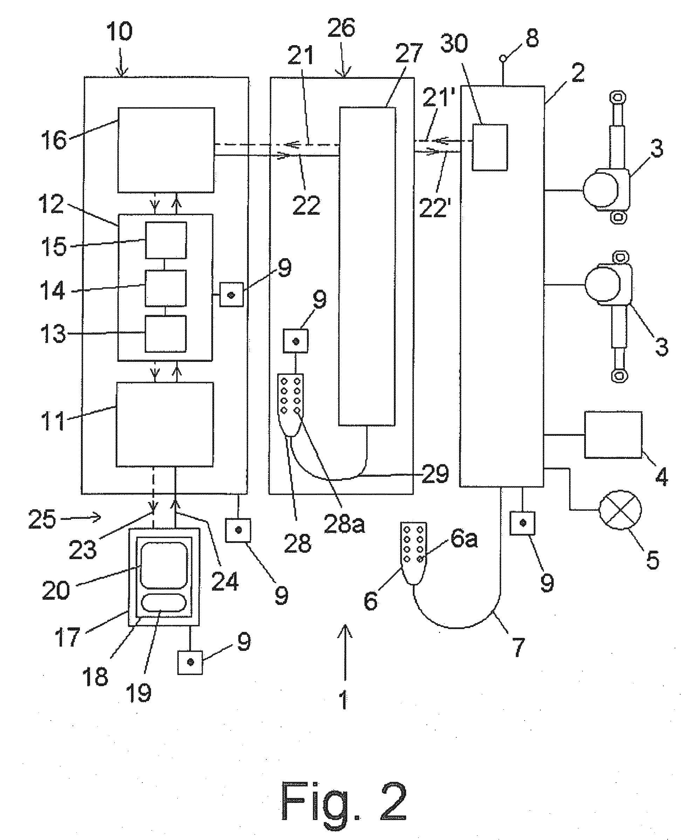

Eine Prozessoreinheit 9, die auch als übergeordnete Intelligenz bezeichnet werden kann und ein Steuerprogramm für den elektromotorischen Möbelantrieb 1 aufweist, kann an unterschiedlichen Stellen des elektromotorischen Möbelantriebs 1 angeordnet sein, wie in den Figuren 1 und 2 zu sehen ist. So kann die Prozessoreinheit 9 zum Beispiel im ersten Ausführungsbeispiel mit der Steuereinrichtung 2 in oder an ihr angeordnet sein. Ebenfalls kann die Prozessoreinheit 9 Bestandteil der Anpassungseinrichtung 10 sein (in ihr oder z.B. an der Umsetzereinrichtung 12). Auch eine Anordnung in der Bedienungseinrichtung 17 ist natürlich möglich.

Fig. 2 zeigt eine schematische Blockdarstellung eines zweiten Ausführungsbeispiels des erfindungsgemäßen Möbelantriebs 1.

Der Unterschied zu dem ersten Ausführungsbeispiel liegt darin, dass der elektromotorische Möbelantriebs 1 hier mit einem Bussystem mit einer Buseinheit 26 ausgerüstet ist. Die Buseinheit 26 weist zum Beispiel eine Busschnittstelle 27 auf und ist zwischen die Anpassungseinrichtung 10 und die Steuereinrichtung 9 geschaltet. Dabei sind die Buseinheit 26 und die Steuereinrichtung 9 über eine Rückmeldestrecke 21' und eine Aktionsstrecke 22' verbunden. Die Busschnittstelle 27 ist mit einem Bushandschalter 28 mit Bushandschalterelementen 28a gekoppelt. Der Bushandschalter 28 kann zum Beispiel die Prozessoreinheit 9 aufweisen.

Die Anpassungseinrichtung 10 ist in diesem zweiten Ausführungsbeispiel so ausgebildet, dass sie eine Anpassung zwischen der Bedienungseinrichtung 17 und der Busschnittstelle 27 in geeigneter Weise vornimmt, wobei entsprechende Umsetzungen und Pegelanpassungen möglich sind.

Auch hierbei ist der Bereich der Steuereinrichtung 2 mit den angeschlossenen Verstellantrieben 3 und Verbrauchern (Heizung 4, Beleuchtungselement 5, eine nicht näher dargestellte Massageeinrichtung, ein nicht gezeigtes Nachtlicht) als erstfehlersicher ausgebildet.

Bei beiden Ausführungsbeispielen kann die Anpassungseinrichtung 10 mit der jeweils angeschlossenen bzw. gekoppelten Bedienungseinrichtung 17 eine Art Fehlererkennung (wie oben beschrieben) oder eine Art Fehlerausschlussverfahren aufweisen.

Die Erfindung ist nicht auf die dargestellten Ausführungsbeispiele beschränkt. Sie kann im Rahmen der beigefügten Ansprüche modifiziert werden.

Es ist zum Beispiel denkbar, dass auch auf dem Anzeigeabschnitt 20 der Bedienungseinrichtung 17 für autorisiertes Personal über entsprechende Kodierungen Ziffern-/Symbolblocks dargestellt werden, um Freigaben/Sperrungen von Funktionen des elektromotorischen Möbelantriebs 1 vornehmen zu können.

Weiterhin ist vorstellbar, dass Anschlüsse für Patientendaten, wie Puls, Blutdruck etc. vorgesehen sind, die für den Patienten oder für autorisiertes Personal auf der Bedienungseinrichtung 17 abrufbar sind.

Natürlich kann die Bedienungseinrichtung 17 auch mit Multimediafunktionen versehen und/oder gekoppelt sein, wie z.B. Telefon, Fernsehen, Radio, Internet und dergleichen.

### Bezugszeichenliste

- 1: Möbelantrieb
- 2: Steuereinrichtung
- 3: Verstellantrieb
- 4: Heizung
- 5: Beleuchtungselement
- 6: Handbedienung
- 6a: Bedienungselement
- 7: Verbindungsstrecke
- 8: Versorgungsanschluss
- 9: Prozessoreinheit
- 10: Anpassungseinrichtung
- 11: Schnittstelle
- 12: Umsetzereinrichtung
- 13: Erster Umsetzer
- 14: Zweiter Umsetzer
- 15: Dritter Umsetzer
- 16: Pegelanpasser
- 17: Bedienungseinrichtung
- 18: Touchscreen
- 19: Bedienungsabschnitt
- 20: Anzeigeabschnitt
- 21, 21': Rückmeldestrecke
- 22, 22': Aktionsstrecke
- 23: Rückmeldeleitung
- 24: Aktionsleitung
- 25: Bedienungsstrecke
- 26: Buseinheit
- 27: Busschnittstelle
- 28: Bushandschalter
- 28a: Bushandschaltelement
- 29: Busleitung
- 30: Rückmeldesignalerzeuger

## Patentansprüche

1. Elektromotorischer Möbelantrieb (1) für ein ein oder mehrere verstellbare Möbelbauteile enthaltendes Möbel, insbesondere ein Pflege- oder Hospitalbett, mit einer Steuereinrichtung (2), mindestens einem Verstellantrieb (3) und mindestens einer Bedienungseinrichtung (17), wobei die mindestens eine Bedienungseinrichtung (17) als ein Multifunktionsbedienteil ausgebildet ist und über eine Anpassungseinrichtung (10) mit der Steuereinrichtung (2) in Verbindung steht, wobei die Anpassungseinrichtung (10) zur Anpassung und Weiterleitung von Rückmeldesignalen der Steuereinrichtung (2) an die Bedienungseinrichtung (17) ausgebildet ist, **dadurch gekennzeichnet, dass** die Rückmeldesignale zur Plausibilisierung von Steuersignalen der Bedienungseinrichtung (17) derart verwendbar sind, dass ein durch eine Störung erzeugtes oder verändertes Steuersignal anhand eines nicht gebildeten Rückmeldesignals als nicht verwendbar erkannt wird.

2. Elektromotorischer Möbelantrieb (1) nach Anspruch 1, **dadurch gekennzeichnet, dass** die Anpassungseinrichtung (10) eine Schnittstelle (11) zum Anschluss der mindestens einen Bedienungseinrichtung (17) und mindestens eine Umsetzereinrichtung (12) aufweist.

3. Elektromotorischer Möbelantrieb (1) nach Anspruch 2, **dadurch gekennzeichnet, dass** die mindestens eine Umsetzereinrichtung (12) der Anpassungseinheit (12) zur Umsetzung von Steuersignalen der Bedienungseinrichtung (17) in Steuersignale der Steuereinrichtung (2) ausgebildet ist.

4. Elektromotorischer Möbelantrieb (1) nach einem oder mehreren der vorhergehenden Ansprüche, **dadurch gekennzeichnet, dass** die Steuereinrichtung (2) mindestens einen Rückmeldesignalerzeuger (30) zur Erzeugung von Rückmeldesignalen aufweist.

5. Elektromotorischer Möbelantrieb (1) nach einem oder mehreren der vorhergehenden Ansprüche, **dadurch gekennzeichnet, dass** die mindestens eine Bedienungseinrichtung (17) zum Empfang der von der Anpassungseinrichtung (10) angepassten und weitergeleiteten Rückmeldesignale der Steuereinrichtung (2) ausgebildet ist.

6. Elektromotorischer Möbelantrieb (1) nach Anspruch 5, **dadurch gekennzeichnet, dass** die mindestens eine Bedienungseinrichtung (17) zur Anzeige der von der Anpassungseinrichtung (10) angepassten und weitergeleiteten Rückmeldesignale der Steuereinrichtung (2) in geeigneter Form mit einem Anzeigeabschnitt (20) ausgebildet ist.

7. Elektromotorischer Möbelantrieb (1) nach einem oder mehreren der vorhergehenden Ansprüche, aufweisend eine Prozessoreinheit (9) **dadurch gekennzeichnet, dass** die Prozessoreinheit (9) zur Erkennung von Betätigungsfehlern der mindestens einen Bedienungseinrichtung (17) derart ausgebildet ist, dass gleichzeitiges Betätigen von Tastenelementen der Bedienungseinrichtung (17) keine Steuersignale erzeugt.

8. Elektromotorischer Möbelantrieb (1) nach einem oder mehreren der vorhergehenden Ansprüche, aufweisend eine Handbedienung (6) mit mindestens einer durch autorisiertes Personal bedienbaren Sperrfunktion, **dadurch gekennzeichnet, dass** ein Zustand der mindestens einen Sperrfunktion mittels der mindestens einen Bedienungseinrichtung (17) anzeigbar ist.

9. Elektromotorischer Möbelantrieb (1) nach einem oder mehreren der vorhergehenden Ansprüche, weiterhin eine Buseinheit (26) aufweisend, **dadurch gekennzeichnet, dass** die Buseinheit (26) zwischen die Anpassungseinrichtung (10) und die Steuereinrichtung (2) geschaltet ist.

## Claims

1. An electric motor furniture drive (1) for a piece of furniture containing one or more adjustable furniture parts, in particular a healthcare or hospital bed, comprising a control unit (2), at least one adjustment drive (3), and at least one operating unit (17), wherein the at least one operating unit (17) is implemented as a multifunction operating part and is connected via an adapter device (10) to the control unit (2), wherein the adapter device (10) is implemented for adapting and relaying feedback signals of the control unit (2) to the operating unit (17), **characterized in that** the feedback signals are usable for a plausibility check of control signals of the operating unit (17) in such a way that a control signal generated or changed by interference is recognized as not usable if a feedback signal is not formed.

2. The electric motor furniture drive (1) according to Claim 1, **characterized in that** the adapter device (10) has an interface (11) for connecting the at least one operating unit (17) and at least one converter unit (12).

3. The electric motor furniture drive (1) according to Claim 2, **characterized in that** the at least one converter unit (12) of the adapter device (10) is implemented to convert control signals of the operating unit (17) into control signals of the control unit (2).

4. The electric motor furniture drive (1) according to one or more of the preceding claims, **characterized in that** the control unit (2) has at least one feedback signal generator (30) for generating feedback signals.

5. The electric motor furniture drive (1) according to one or more of the preceding claims, **characterized in that** the at least one operating unit (17) is implemented to receive the feedback signals of the control unit (2), which are adapted and relayed by the adapter device (10).

6. The electric motor furniture drive (1) according to Claim 5, **characterized in that** the at least one operating unit (17) is implemented to display the feedback signals of the control unit (2), which are adapted and relayed by the adapter device (10), in suitable form using a display section (20).

7. The electric motor furniture drive (1) according to one or more of the preceding claims, having a processor unit (9), **characterized in that** the processor unit (9) is implemented to recognize actuating errors of the at least one operating unit (17) in such a way that no control signals are generated on a simultaneous activation of button elements of the operating unit (17).

8. The electric motor furniture drive (1) according to one or more of the preceding claims, having a manual control (6) having at least one blocking function operable by authorized personnel, **characterized in that** a status of the at least one blocking function can be displayed by means of the at least one operating unit (17).

9. The electric motor furniture drive (1) according to one or more of the preceding claims, furthermore having a bus unit (26), **characterized in that** the bus unit (26) is connected between the adapter device (10) and the control unit (2).

## Revendications

1. Entraînement de meuble à moteur électrique (1) pour un meuble contenant une ou plusieurs parties de meuble réglables, en particulier un lit de soins ou d'hôpital, avec un dispositif de contrôle (2), au moins un entraînement de réglage (3) et au moins un dispositif de commande (17), dans lequel l'au moins un dispositif de commande (17) est conformé comme une unité de commande multifonction et communique par l'intermédiaire d'un dispositif adaptateur (10) avec le dispositif de contrôle (2), le dispositif adaptateur (10) étant conçu pour l'adaptation et la transmission de signaux de rétroaction du dispositif de contrôle (2) au dispositif de commande (17), **caractérisé en ce que** les signaux de rétroaction sont utilisables pour vérifier la plausibilité de signaux de contrôle du dispositif de commande (17) de telle manière qu'un signal de contrôle produit ou modifié par une anomalie soit reconnu comme non exploitable parce qu'un signal de rétroaction n'est pas constitué.

2. Entraînement de meuble à moteur électrique (1) selon la revendication 1, **caractérisé en ce que** le dispositif adaptateur (10) comporte une interface (11) pour le raccordement de l'au moins un dispositif de commande (17) et au moins un dispositif convertisseur (12).

3. Entraînement de meuble à moteur électrique (1) selon la revendication 2, **caractérisé en ce que** l'au moins un dispositif convertisseur (12) de l'unité d'adaptation (12) est conçu pour convertir des signaux de contrôle du dispositif de commande (17) en signaux de contrôle du dispositif de contrôle (2).

4. Entraînement de meuble à moteur électrique (1) selon une ou plusieurs des revendications précédentes, **caractérisé en ce que** le dispositif de contrôle (2) comporte au moins un générateur de signaux de rétroaction (30) destiné à produire des signaux de rétroaction.

5. Entraînement de meuble à moteur électrique (1) selon une ou plusieurs des revendications précédentes, **caractérisé en ce que** l'au moins un dispositif de commande (17) est conçu pour recevoir des signaux de rétroaction du dispositif de contrôle (2) adaptés et transmis par le dispositif adaptateur (10).

6. Entraînement de meuble à moteur électrique (1) selon la revendication 5, **caractérisé en ce que** l'au moins un dispositif de commande (17) est conçu pour afficher les signaux de rétroaction du dispositif de contrôle (2) adaptés et transmis par le dispositif adaptateur (10). sous une forme appropriée avec une partie d'affichage (20).

7. Entraînement de meuble à moteur électrique (1) selon une ou plusieurs des revendications précédentes, présentant une unité de processeur (9), **caractérisé en ce que** l'unité de processeur (9) est conçue pour reconnaître les erreurs d'actionnement de l'au moins un dispositif de commande (17), de telle sorte qu'un actionnement simultané d'éléments formant des touches sur le dispositif de commande (17) ne produise pas de signaux de contrôle.

8. Entraînement de meuble à moteur électrique (1) selon une ou plusieurs des revendications précédentes, présentant une commande manuelle (6) avec au moins une fonction de blocage pouvant être commandée par le personnel autorisé, **caractérisé en ce qu'**un état de l'au moins une fonction de blocage peut être affiché au moyen de l'au moins un dispositif de commande (17).

9. Entraînement de meuble à moteur électrique (1) selon une ou plusieurs des revendications précédentes, comportant en outre une unité de bus (26), **caractérisé en ce que** l'unité de bus (26) est connectée entre le dispositif adaptateur (10) et le dispositif de contrôle (2).
